# EUROPEAN PATENT SPECIFICATION

(11) **EP 1 968 296 B1**
(45) Date of publication and mention of the grant of the patent: **14.05.2014**
(21) Application number: 08151699.9
(22) Date of filing: 20.02.2008
(51) Int. Cl.: H04N 1/00, H04N 1/203, B65H 15/00

(54) **Method of duplex printing on sheet media**
Verfahren für den Duplexdruck auf Blattmedien
Procédé d'impression duplex sur des supports en feuille

(30) Priority: 05.03.2007 US 714016
(43) Date of publication of application: 10.09.2008
(73) Proprietor: Xerox Corporation, Rochester, New York 14644 (US)
(72) Inventor: Furst, Michael R., Rochester, NY 14607 (US)
(74) Representative: Grünecker, Kinkeldey, Stockmair & Schwanhäusser

(56) References cited:
- EP-A- 1 612 051
- US-A- 4 019 435
- US-A- 4 909 374
- US-A1- 2002 141 805
- US-A1- 2006 291 018
- US-B1- 6 195 151

## Description

### BACKGROUND

In automatic copying and printing with electrostatic or xerographic techniques, where printing of an image on both sides of the print media sheet has been required, it is necessary to invert the sheet by reversing the sheet with respect to the leading and trailing edge in the direction of feed after printing on one side. This results in what was originally the leading edge with respect to the direction of feed now becoming the trailing edge. Typically such copying machines register against the leading edge of the sheet for positioning the sheet during printing of the first side. Inverting the sheet to present an opposite edge as the leading edge for registration introduces error in locating the image on the second side of the sheet with respect to the image printed on the first side. Where the pages are to be bound or placed in a notebook the misorientation of the printed image on opposite sides is quite noticeable to the reader upon turning the pages and is considered to be unacceptable printing quality.

In an office or enterprise printing arrangement, duplex printing may be accomplished by employing two common printing engines, with the output of the first, after being inverted, feeding into the second identical printing engine. This type arrangement permits serial duplex printing or parallel dual simplex printing by an operator separately feeding sheet stacks to each printing engine individually. However, this does not permit continuity in scheduling print jobs. Thus, it has been desired to provide a way or means of enabling automatic electrostatic duplex printing in a manner which eliminates the registration errors associated with positioning the image on the opposite side with respect to opposite edges of the print sheet media. It has further been desired to permit scheduling duplex and simplex printing continuously on equipment utilizing plural identical printing engines.

US 2002/0141805 A1 describes mobius combination of reversion and return path in a paper transport system. An apparatus for processing a substrate on two sides. A substrate has a first edge as a leading edge in a process direction and a first side in a face-up orientation. The apparatus comprises an input pathway for receiving the substrate from a substrate processing station, a station for processing the face-up side of the substrate, a reversion pathway for reverting the substrate and returning the reverted substrate to the input pathway. After reversion, a second side of the substrate is in the face up orientation and the first edge is the leading edge. A merge point merges the reverted substrate into the input pathway for processing the face-up side of the substrate in the print station.

EP 1 612 051 A1 describes flexible paper path using multidirectional path modules. A modular flexible media handling apparatus includes an input module through which flexible media enters the apparatus, at least one main path module through which flexible media passes along a main path, at least one lookaside module through which flexible media selectively passes along a lookaside path, and an output module in which flexible media from the lookaside path and main path are merged.

US 6,195,151 B1 describes media handling system for duplex printing. A media sheet handling system for duplex printing is described. During duplex printing, the media sheet whose first side is printed is directed into a duplex print path, wherein the media sheet is reversed to a flipped over state with respect to its original position and the original leading edge is maintained to be the leading edge for subsequent printing.

US 4,019,435 describes sheet inverting. An improved paper handling system includes a pair of work units which sequentially work on opposite sides of a sheet with the same edge of the sheet leading. An inverter between the two work units is effective to invert the sheet in such a manner that the edge of the sheet which leads during passage of the sheet through the first work unit will also lead as the sheet passes through the second work unit. A sheet which has been worked on, first side up, by the first work unit will also lead as the sheet passes through the second work unit. A sheet which has been worked on, first side up, by the first work unit with a head edge of the sheet leading is moved by a first conveyor along a first path into engagement with a stop member which engages the head edge of the sheet to arrest it at a first readiness position. A pusher then engages a side edge of the sheet and pushes it sidewardly. The turnover mechanism is effective to move the sheet sidewardly along a generally U-shaped path into engagement with a stop to register the sheet at a second readiness position relative to the second work unit. A second conveyor is then effective to move the sheet into the second work unit with the head edge of the sheet leading and a second side of the sheet facing upwardly.

US 4,909,374 describes flat article direction changing device. A device for guiding flat articles being fed horizontally and changing the direction of movement from one direction to another wherein the change in direction may be as great as 90 DEG . This is accomplished by providing a housing with internal rollers capable of being rotated in one of two directions.

US 2006/0291018 A1 describes mixed output print control method and system. A merging module connects two printing systems at approximately 90 degrees to one another. The merging module includes a sheet rotator in a plane that is common to the paper paths of both print engines and a buffer. It also includes two bypass paths (one above and one below the rotator) to route the two paper paths around the rotator and enable both print engines to deliver their output to the appropriate finishing device as well as to the buffer.

### SUMMARY OF THE INVENTION

It is the object of present invention to improve duplex printing in printing systems. This object is achieved by providing a method of duplex printing on a sheet media according to claim 1. Embodiments of the invention are set forth in the dependent claims.

The method of the present disclosure utilizes a transfer belt arrangement which moves the sheet from the output of the first printing engine through a change in direction of movement of about 180°, without rotating the sheet stock, to preserve the identity of the leading edge of the sheet stock with respect to feed into the printing engines. In the exemplary embodiment illustrated, the sheet stock is transported through a first quarter turn, transported linearly to a second quarter turn and then fed into the second printing engine.

### BRIEF DESCRIPTION OF THE DRAWINGS

FIGURE 1 is a pictorial schematic of the first exemplary embodiment of the method of the present disclosure; and

FIGURE 2 is a view similar to FIGURE 1 of a second exemplary embodiment of the method of the present disclosure.

### DETAILED DESCRIPTION

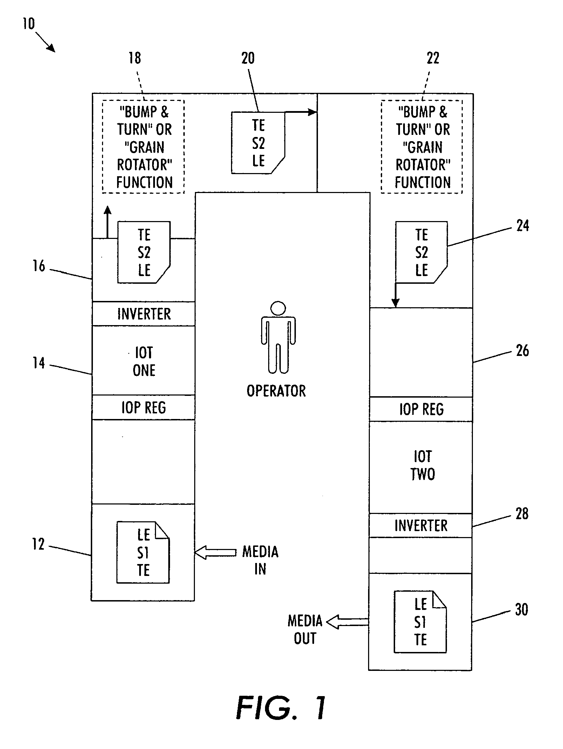

Referring to FIGURE 1, an equipment arrangement for practicing the method of the present disclosure is indicated generally at 10 and includes a first print media sheet input station 12 which may include a sheet stack tray and feeder as well known in the art. The print media sheets are stacked so as to be fed for printing on one side, indicated by the reference character S1 in FIGURE 1, and with a leading edge of each sheet identified by the reference character LE. The sheets from the feeder 12 are inputted to a first printing engine 14 for printing on side S1; and, upon completion of the printing on side S1, the sheets are inverted at station 16 so as to be prepared for printing on the opposite side indicated by the reference character S2 in FIGURE 1. The sheets are moved in the direction shown by the black arrow with the trailing edge TE now in the lead. The sheets to be printed on side S2 are then transported to a turning station 18 which effects a quarter turn or about 90° turn without rotation of the sheets such that the trailing edge and leading edge are now disposed at right angles to the direction of movement.

The sheets are then transported linearly in the direction of the black arrow as identified at station 20 and are processed through a second quarter turn, or about 90° of turn, in direction of movement without rotation of the sheet. This results in the orientation of the sheet indicated by reference numeral 24 where the original leading edge LE is now returned to the leading position. The sheet is then transported and fed to the input of a second printing engine 26, which prints on the second side S2 of the sheet. The second engine, which may be identical to the first engine 14, then (optionally) passes the sheet through a second inverter 28 and out to a stack processor such as a collator or other sheet arrangement receptacle as denoted by reference numeral 30.

Thus, it will be seen with reference to FIGURE 1 that duplex printing of sheet media on both sides thereof is effected by serially feeding into a first and second printing engine while maintaining registration for image positioning purposes on the sheet against a common edge of the sheet irrespective of the inverting of the sheet toward printing on the opposite side thereof. The sheet is thus transported through a U-turn or about a 180° turn while maintaining the orientation of the paper with respect to the stationary printing engines.

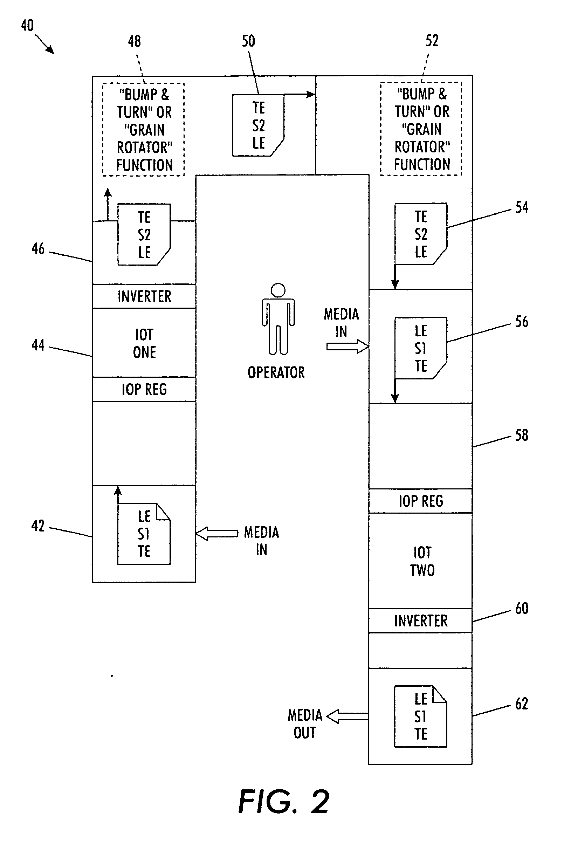

Referring to FIGURE 2, a second exemplary embodiment of the method of the present disclosure is illustrated where the printing equipment is arranged in a generally U-shaped array as indicated generally at 40 and has a media sheet input station 42 which may also be a tray or feed stack feeder device for inputting the sheets serially to a print engine indicated at 44. The sheets are inputted in station 42 with the leading edge, denoted LE, oriented for entering the printing engine 44 and serving as the registration surface therein for locating the image on the sheet for printing one side thereof indicated by the reference character S1 in FIGURE 2.

Upon completion of printing on the side S1, the sheets are serially fed to an inverter 46 which inverts the sheet with the second side S2 displayed upwardly for subsequent printing thereon; and, the leading edge LE is now in the position of trailing with respect to the direction of movement indicated by the arrow in FIGURE 2.

The sheet is transported from the inverter 46 to a turn station 48 where the sheet undergoes a quarter turn or, about a 90° turn, and subsequent transport linearly to the station 50. With reference to FIGURE 2, the sheet is orientated at station 50 with the leading edge TE and trailing edge LE disposed at right angles to the direction of movement indicated by the black arrow at station 50.

The system then transports the sheets from station 50 to a turn station 52 where the sheets undergo a second quarter turn, or about 90° turn, so that the sheet is moved to station 54 with the orientation remaining unchanged such that the leading edge LE is now in the position of leading. The sheet is then transported through a second media sheet loading station 56 and fed into the input of a second printing engine 58 which may be identical to the first engine 44 for printing on the side S2 of the sheet. The sheet is then fed through a second inverter 60 and out of the second printing engine onto a media sheet receptacle 62 which may be, for example, a collating apparatus.

If it is desired, while scheduling the print job for the duplex printing of the sheets entering engine 58 from engine 44, the job may be scheduled such that the duplex printing is interrupted and sheets are fed from media station 56 into the second printing engine 58 for a simplex printing; and, the duplex printing of the sheets from station 54 continued thereafter. The arrangement of FIGURE 2 thus enables two identical printing engines 44, 58 to be employed for ready access by a single operator and may provide for continuous duplex and simplex printing. The arrangement of FIGURE 2 maintains the orientation of the sheet media with respect to having a common edge of the sheet enter the first and second printer for registration purposes in locating the image on the surface of the sheet and thus reduces errors of image location in duplex printing.

## Claims

1. A method of duplex printing on sheet medium comprising:
(a) feeding a sheet medium into a first printing device (14, 44) with an edge inserted into the printing device first being a leading edge (LE) and the edge entering the printing device last being a trailing edge said leading edge and said trailing edge being at right angles to the direction of feeding;
(b) registering on the leading edge (LE) and printing an image on a first side (S1) of the sheet such that the sheet emerging from the printing device contains an image on the first side but an image is not placed on an opposite second side (S2) of the sheet;
(c) inverting the sheet in an inverter (16) such that the trailing edge (TE) faces the direction of motion and the first side (S1) is facing the direction that the second side (S2) was previously facing and then feeding the sheet out of the inverter (16) in a direction with the leading edge trailing;
(d) transporting the sheet through a change in direction of approximately 90° such that the leading edge (LE) and the trailing edge (TE) are parallel to the direction of motion;
(e) transporting the sheet in a translation motion such that the sheet moves in a manner where both the leading edge and the trailing edge are parallel to the direction of motion;
(f) transporting the sheet through a change in direction of approximately 90° such that the leading edge (LE) is again leading by currently being at a right angle to the direction of motion;
(g) feeding the sheets into a second printing device and registering on the leading edge and printing on the second side opposite the one side;
(h) inverting the sheet after printing in the second device such that the first side (S1) is facing the direction that the second side (S2) was previously facing and the trailing edge (TE) is currently facing toward the direction of motion; and
(i) feeding the sheet out, wherein (d), (e) and (f) are carried out utilizing a transfer belt arrangement.

2. The method defined in claim 1, further comprising feeding additional media sheets into said second printing device (26) serially with the sheets from the first printing device (24) and simplex printing on the additional sheets in the second printing device (24).

## Patentansprüche

1. Verfahren für den Duplexdruck auf Blattmedien, umfassend:
(a) Zuführen eines Blattmediums in eine erste Druckvorrichtung (14, 44), wobei eine zuerst in die Druckvorrichtung eingeführte Kante eine Vorderkante (LE) und die zuletzt in die Druckvorrichtung eingeführte Kante eine Hinterkante ist, wobei die Vorderkante und die Hinterkante rechtwinklig zu der Vorschubrichtung angeordnet sind;
(b) Registrieren an der Vorderkante (LE) und Drucken eines Bildes auf einer ersten Seite (S1) des Blattes, so dass das aus der Druckvorrichtung austretende Blatt ein Bild auf der ersten Seite enthält, aber kein Bild auf der gegenüberliegenden zweiten Seite (S2) platziert ist;
(c) Umdrehen des Blattes in einem Umkehrer (16) solcherart, dass die Hinterkante (TE) in Transportrichtung ausgerichtet ist und die erste Seite (S1) in der Richtung ausgerichtet ist, in der zuvor die zweite Seite (S2) ausgerichtet war und anschließendes Transportieren des Blattes aus dem Umkehrer (16) in einer Richtung, in der die Vorderkante nachläuft;
(d) Transportieren des Blattes durch eine Richtungsänderung von etwa 90°, so dass die Vorderkante (LE) und die Hinterkante (TE) parallel zu der Bewegungsrichtung ausgerichtet sind;
(e) Transportieren des Blattes in einer Translationsbewegung, so dass sich das Blatt so bewegt, dass sich sowohl die Vorderkante als auch die Hinterkante parallel zu der Bewegungsrichtung befinden;
(f) Transportieren des Blattes durch eine Richtungsänderung von etwa 90°, so dass die Vorderkante (LE) wieder führt, während sie aktuell rechtwinklig zu der Bewegungsrichtung ausgerichtet ist;
(g) Zuführen der Blätter in eine zweite Druckvorrichtung und Registrieren an der Vorderkarte und Drucken auf der zweiten, der ersten gegenüberliegenden Seite;
(h) Umdrehen des Blattes nach dem Drucken in der zweiten Vorrichtung, so dass die erste Seite (S1) in der Richtung ausgerichtet ist, in der zuvor die zweite Seite (S2) ausgerichtet war und die Hinterkante (TE) aktuell in Bewegungsrichtung ausgerichtet ist; und
(i) Auswerfen des Blattes, wobei (d), (e) und (f) unter Verwendung einer Transportbandanordnung ausgeführt werden.

2. Verfahren nach Anspruch 1, des Weiteren umfassend das fortlaufende Zuführen von zusätzlichen Blattmedien in die zweite Druckvorrichtung (26) mit den Blättern aus der ersten Druckvorrichtung (24) und einseitiges Bedrucken der zusätzlichen Blätter in der zweiten Druckvorrichtung (24).

## Revendications

1. Procédé d'impression recto verso sur un support en feuille comprenant le fait :
(a) d'introduire un support en feuille dans un premier dispositif d'impression (14, 44) dont un bord inséré en premier dans le dispositif d'impression constitue un bord avant (LE) et le bord rentrant en dernier dans le dispositif d'impression constitue un bord arrière, ledit bord avant et ledit bord arrière étant à angle droit par rapport à la direction d'introduction ;
(b) d'effectuer un enregistrement sur le bord avant (LE) et une impression d'une image sur un premier côté (S1) de la feuille de sorte que la feuille sortant du dispositif d'impression contienne une image sur le premier côté sans qu'il n'y ait d'image placée sur un deuxième côté opposé (S2) de la feuille ;
(c) d'inverser la feuille dans un inverseur (16) de sorte que le bord arrière (TE) soit opposé à la direction de mouvement et que le premier côté (S1) soit opposé à la direction à laquelle a été précédemment opposé le deuxième côté (S2) et ensuite de faire sortir la feuille de l'inverseur (16) dans une direction avec le bord avant en arrière ;
(d) de transporter la feuille par un changement de direction d'environ 90° de sorte que le bord avant (LE) et le bord arrière (TE) soient parallèles à la direction de mouvement ;
(e) de transporter la feuille selon un mouvement de translation de sorte que la feuille se déplace d'une manière où à la fois le bord avant et le bord arrière sont parallèles à la direction de mouvement ;
(f) de transporter la feuille par un changement de direction d'environ 90° de sorte que le bord avant (LE) soit de nouveau en avant en étant à ce moment à angle droit par rapport à la direction de mouvement ;
(g) d'introduire les feuilles dans un deuxième dispositif d'impression et d'effectuer un enregistrement sur le bord avant et une impression sur le deuxième côté opposé au premier côté ;
(h) d'inverser la feuille après une impression dans le deuxième dispositif de sorte que le premier côté (S1) soit opposé à la direction à laquelle a été précédemment opposé le deuxième côté (S2) et que le bord arrière (TE) soit à ce moment opposé à la direction de mouvement ; et
(i) de faire sortir la feuille, où (d), (e) et (f) sont exécutées en utilisant un agencement de courroie de transfert.

2. Procédé défini dans la revendication 1, comprenant en outre l'introduction de feuilles de supports supplémentaires dans ledit deuxième dispositif d'impression (26) en série avec les feuilles provenant du premier dispositif d'impression et l'impression simple face (24) sur les feuilles supplémentaires dans le deuxième dispositif d'impression (24).
